# EUROPEAN PATENT APPLICATION

(11) **EP 4 645 316 A1**
(43) Date of publication of application: **05.11.2025**
(21) Application number: 23917760.3
(22) Date of filing: 25.12.2023
(51) Int. Cl.: G12B 5/00, B23Q 1/01, B23Q 1/56

(54) **TABLE DEVICE**

(30) Priority: 18.01.2023 JP 2023005776
(71) Applicant: Nippon Thompson Co., Ltd., Tokyo 108-8586 (JP)
(72) Inventor: MIZUNO Hiroshi, Toki-shi, Gifu 509-5142 (JP)
(74) Representative: Isarpatent
(86) International application number: PCT/JP2023/046364
(87) International publication number: WO 2024/154550

(57) **Abstract**

A table unit includes: a base portion; a first linear motion mechanism including a first rail and a first slider; a support portion movable in a first direction together with the first slider, the support portion including a first support surface attached to the first slider and a second support surface spaced apart from the first support surface in a direction perpendicular to a base surface; a second linear motion mechanism including a second rail and a second slider; a table portion movable in a second direction together with the second slider, the table portion including a first table surface, a second table surface, a third table surface, and a fourth table surface; a third linear motion mechanism including a third rail and a third slider; a fourth linear motion mechanism including a fourth rail, attached to the fourth table surface, and a fourth slider; a first drive portion causing a first movable portion attached to the third slider to perform a linear reciprocating motion in the first direction; and a second drive portion causing a second movable portion attached to the fourth slider to perform a linear reciprocating motion in the first direction.

## Description

### Technical Field

The present disclosure relates to a table unit. The present application claims priority based on Japanese Patent Application No. 2023-005776 filed on January 18, 2023, the entire contents of which are incorporated herein by reference.

### Background Art

A table unit having a table movable in horizontal and vertical directions has been disclosed (see, e.g., Patent Literature 1).

### Citation List

### Patent Literature

Patent Literature 1: Japanese Patent Application Laid-Open No. 2011-112625

### Summary of Invention

### Technical Problem

In a table unit, the table may be moved in the horizontal direction, which is the X direction, and in the Y direction, which is orthogonal to the X direction. For such a table unit, a lower profile is required.

Thus, one of the objects is to provide a table unit that can achieve a lower profile for the unit.

### Solution to Problem

A table unit according to the present disclosure includes: a base portion having a base surface; a first linear motion mechanism including a first rail attached to the base surface and extending in a first direction, and a first slider attached to the first rail and movable in the first direction; a support portion movable in the first direction together with the first slider, the support portion including a first support surface facing the base surface and attached to the first slider, and a second support surface spaced apart from the first support surface in a direction perpendicular to the base surface; a second linear motion mechanism including a second rail attached to the second support surface and extending in a second direction intersecting the first direction, and a second slider attached to the second rail and movable in the second direction; a table portion movable in the second direction together with the second slider, the table portion including a first table surface facing the second support surface and attached to the second slider, a second table surface spaced apart from the first table surface in the direction perpendicular to the base surface, a third table surface intersecting each of the first table surface and the second table surface, and a fourth table surface intersecting each of the first table surface, the second table surface, and the third table surface; a third linear motion mechanism including a third rail attached to the third table surface and extending in a third direction intersecting each of the first direction and the second direction, and a third slider attached to the third rail and movable in the third direction; a fourth linear motion mechanism including a fourth rail attached to the fourth table surface and extending in a fourth direction intersecting each of the first direction, the second direction, and the third direction, and a fourth slider attached to the fourth rail and movable in the fourth direction; a first drive portion including a first movable portion attached to the third slider, and causing the first movable portion to perform a linear reciprocating motion in the first direction; and a second drive portion including a second movable portion attached to the fourth slider, and causing the second movable portion to perform a linear reciprocating motion in the first direction.

### Advantageous Effects of Invention

The table unit described above can achieve a lower profile for the unit.

### Brief Description of Drawings

[FIG. 1] FIG. 1 is a schematic perspective view of a table unit of Embodiment 1 of the present disclosure.
[FIG. 2] FIG. 2 is a schematic plan view of the table unit shown in FIG. 1.
[FIG. 3] FIG. 3 is a schematic side view of the table unit shown in FIG. 1.
[FIG. 4] FIG. 4 is a schematic front view of the table unit shown in FIG. 1.
[FIG. 5] FIG. 5 is a schematic cross-sectional view when cut in a cross section indicated by arrows V-V in FIG. 2.
[FIG. 6] FIG. 6 is a schematic perspective view of the table unit shown in FIG. 1, with a table portion, described later, removed.
[FIG. 7] FIG. 7 is a schematic plan view of the table unit shown in FIG. 6.
[FIG. 8] FIG. 8 is a schematic side view of the table unit shown in FIG. 6.
[FIG. 9] FIG. 9 is a schematic front view of the table unit shown in FIG. 6.
[FIG. 10] FIG. 10 is a schematic perspective view of the table unit shown in FIG. 6, with a support portion and a second linear motion device, described later, removed.
[FIG. 11] FIG. 11 is a schematic plan view of the table unit shown in FIG. 10.
[FIG. 12] FIG. 12 is a schematic side view of the table unit shown in FIG. 10.
[FIG. 13] FIG. 13 is a schematic front view of the table unit shown in FIG. 10.
[FIG. 14] FIG. 14 is a schematic plan view of the table unit when a table portion is moved in a direction indicated by arrow D₁ in a first direction.
[FIG. 15] FIG. 15 is a schematic plan view of the table unit when the table portion is moved in a direction indicated by arrow D₂ in the first direction.
[FIG. 16] FIG. 16 is a schematic plan view of the table unit when the table portion is moved in a direction indicated by arrow D₃ in a second direction.
[FIG. 17] FIG. 17 is a schematic plan view of the table unit when the table portion is moved in a direction indicated by arrow D₄ in the second direction.
[FIG. 18] FIG. 18 is a schematic perspective view of a table unit of Embodiment 2 of the present disclosure.
[FIG. 19] FIG. 19 is a schematic plan view of the table unit shown in FIG. 18.
[FIG. 20] FIG. 20 is a schematic side view of the table unit shown in FIG. 18.
[FIG. 21] FIG. 21 is a schematic front view of the table unit shown in FIG. 18.
[FIG. 22] FIG. 22 is a schematic perspective view of the table unit shown in FIG. 18, with a rotary stage, described later, removed.
[FIG. 23] FIG. 23 is a schematic plan view of the table unit shown in FIG. 22.
[FIG. 24] FIG. 24 is a schematic side view of the table unit shown in FIG. 22.
[FIG. 25] FIG. 25 is a schematic front view of the table unit shown in FIG. 22.
[FIG. 26] FIG. 26 is a schematic perspective view of the rotary stage, described later, included in the table unit.
[FIG. 27] FIG. 27 is a schematic perspective view of the table unit, showing the state in which the rotary stage described later is rotated.
[FIG. 28] FIG. 28 is a schematic plan view of the table unit shown in FIG. 27.
[FIG. 29] FIG. 29 is a schematic side view of the table unit shown in FIG. 27.
[FIG. 30] FIG. 30 is a schematic front view of the table unit shown in FIG. 27. Description of Embodiments

### [Outline of Embodiments]

A table unit of the present disclosure includes: a base portion having a base surface; a first linear motion mechanism including a first rail attached to the base surface and extending in a first direction, and a first slider attached to the first rail and movable in the first direction; a support portion movable in the first direction together with the first slider, the support portion including a first support surface facing the base surface and attached to the first slider, and a second support surface spaced apart from the first support surface in a direction perpendicular to the base surface; a second linear motion mechanism including a second rail attached to the second support surface and extending in a second direction intersecting the first direction, and a second slider attached to the second rail and movable in the second direction; a table portion movable in the second direction together with the second slider, the table portion including a first table surface facing the second support surface and attached to the second slider, a second table surface spaced apart from the first table surface in the direction perpendicular to the base surface, a third table surface intersecting each of the first table surface and the second table surface, and a fourth table surface intersecting each of the first table surface, the second table surface, and the third table surface; a third linear motion mechanism including a third rail attached to the third table surface and extending in a third direction intersecting each of the first direction and the second direction, and a third slider attached to the third rail and movable in the third direction; a fourth linear motion mechanism including a fourth rail attached to the fourth table surface and extending in a fourth direction intersecting each of the first direction, the second direction, and the third direction, and a fourth slider attached to the fourth rail and movable in the fourth direction; a first drive portion including a first movable portion attached to the third slider, and causing the first movable portion to perform a linear reciprocating motion in the first direction; and a second drive portion including a second movable portion attached to the fourth slider, and causing the second movable portion to perform a linear reciprocating motion in the first direction.

According to the table unit of the present disclosure, the table portion can be moved to any position in the first and second directions in a plane defined by the first and second directions, by utilizing the guide by the third linear motion mechanism and the guide by the fourth linear motion mechanism through the control of the linear reciprocating motion of the first movable portion by the first drive portion and the control of the linear reciprocating motion of the second movable portion by the second drive portion. In this case, the movement of the table portion in the first direction is guided by the first linear motion mechanism, and the movement of the table portion in the second direction is guided by the second linear motion mechanism, thereby enabling smooth movement of the table portion. Here, the first slider included in the first linear motion mechanism is attached to the first support surface of the support portion, and the second rail included in the second linear motion mechanism is attached to the second support surface of the support portion, so the mechanism for moving the table portion in the first direction and the second direction can be reduced in size in the direction perpendicular to the base surface. Therefore, such a table unit can achieve a lower profile for the unit.

In the above table unit, the first direction and the second direction may be orthogonal to each other. This enables more efficient movement of the table portion in the first direction and the second direction in the above-described plane.

In the above table unit, the third direction and the fourth direction may be orthogonal to each other. This enables more efficient movement of the table portion in the first direction and the second direction in the above-described plane.

In the above table unit, the first linear motion mechanism may include a plurality of the first rails and a plurality of the first sliders. This enables more stable movement of the table portion in the first direction by utilizing the plurality of first rails and the plurality of first sliders.

In the above table unit, the second linear motion mechanism may include a plurality of the second rails and a plurality of the second sliders. This enables more stable movement of the table portion in the second direction by utilizing the plurality of second rails and the plurality of second sliders.

In the above table unit, at least one of the first drive portion and the second drive portion may include a ball screw having a screw shaft and a nut, and a motor operable to rotate the screw shaft. This makes it easy to more precisely control the linear reciprocating motion of at least one of the first movable portion and the second movable portion. Therefore, it becomes possible to more easily perform the precise positioning of the table portion.

In the above table unit, the third table surface and the fourth table surface may be orthogonal to each other. This enables more efficient movement of the table portion in the first direction and the second direction in the above-described plane.

In the above table unit, the first drive portion and the second drive portion may be arranged apart from each other in the second direction. This makes it possible to align the direction in which a cable connected to the first drive portion extends and the direction in which a cable connected to the second drive portion extends, thereby facilitating the handling of the cables during installation. Therefore, it becomes easier to achieve a lower profile for the unit.

In the above table unit, the first linear motion mechanism may include a pair of the first rails and a pair of the first sliders. The second linear motion mechanism may include a pair of the second rails and a pair of the second sliders. The pair of first rails may be arranged in parallel. The pair of second rails may be arranged in parallel. The second rails may be orthogonal to the first rails. With this configuration, the loads applied to the first and second linear motion mechanisms in the direction orthogonal to the base surface can be appropriately distributed. Therefore, the movement of the table portion in the first direction and the second direction can be controlled more stably.

In the above table unit, the third table surface and the fourth table surface may each extend along a direction perpendicular to the base surface and constitute a side surface of the table portion. This can simplify the configuration of the table portion. Therefore, the configuration of the table unit can be further simplified.

In the above table unit, the first drive portion may include a fifth linear motion mechanism. The second drive portion may include a sixth linear motion mechanism. The fifth linear motion mechanism may include a fifth rail attached to the base surface and extending in the first direction, and a fifth slider attached to the fifth rail and movable along the first direction. The first movable portion may be attached to the fifth slider. The sixth linear motion mechanism may include a sixth rail attached to the base surface and extending in the first direction, and a sixth slider attached to the sixth rail and movable along the first direction. The second movable portion may be attached to the sixth slider. With this configuration, the fifth linear motion mechanism can smoothly move the first movable portion in the first drive portion in the first direction. Further, the sixth linear motion mechanism can smoothly move the second movable portion in the second drive portion in the first direction. Therefore, the table portion can be moved more smoothly.

The above table unit may further include: a third drive portion including a third movable portion movable in a third direction intersecting the first direction, and causing the third movable portion to perform a linear reciprocating motion in the third direction; a shaft portion extending in a direction perpendicular to a plane defined by the first direction and the third direction; a rotary portion attached to the third movable portion and rotating around the shaft portion along with movement of the third movable portion; and a rotary stage provided on the second table surface and attached to the rotary portion so as to be rotatable along with the movement of the third movable portion. With this configuration, the rotary stage can be rotated in the plane defined by the first direction and the third direction. Then, the rotary stage can be rotated by moving the table portion in the first direction and the second direction. This can further improve the convenience.

In the above table unit, the third direction may be a direction orthogonal to the first direction and identical to the second direction. With this configuration, the rotary stage can be efficiently rotated while reducing the risk of interference between the third drive portion and the rotary stage.

In the above table unit, the third drive portion may include a seventh linear motion mechanism. The seventh linear motion mechanism may include a seventh rail attached to the base surface and extending in the third direction, and a seventh slider attached to the seventh rail and movable along the third direction. The third movable portion may be attached to the seventh slider. With this configuration, in the third drive portion, the seventh linear motion mechanism can smoothly move the third movable portion in the third direction. Therefore, the rotary stage can be rotated more smoothly.

In the above table unit, the rotary portion may include a bearing that supports the shaft portion. This ensures a smoother rotation of the rotary portion. Therefore, the rotary stage can be rotated more smoothly.

In the above table unit, the rotary portion may include an attachment portion attached to a side surface of the rotary stage, and an eighth linear motion mechanism. The eighth linear motion mechanism may include an eighth rail attached to the attachment portion and extending in a radial direction of the rotary stage, and an eighth slider attached to the eighth rail and movable along the radial direction of the rotary stage. The third movable portion may be attached to the eighth slider. This ensures a smoother movement of the attachment portion. Therefore, the rotary stage can be rotated more smoothly.

### [Specific Embodiments]

Specific embodiments of the table unit of the present disclosure will be described below with reference to the drawings. In the drawings referenced below, the same or corresponding portions are denoted by the same reference numerals and the description thereof will not be repeated.

### (Embodiment 1)

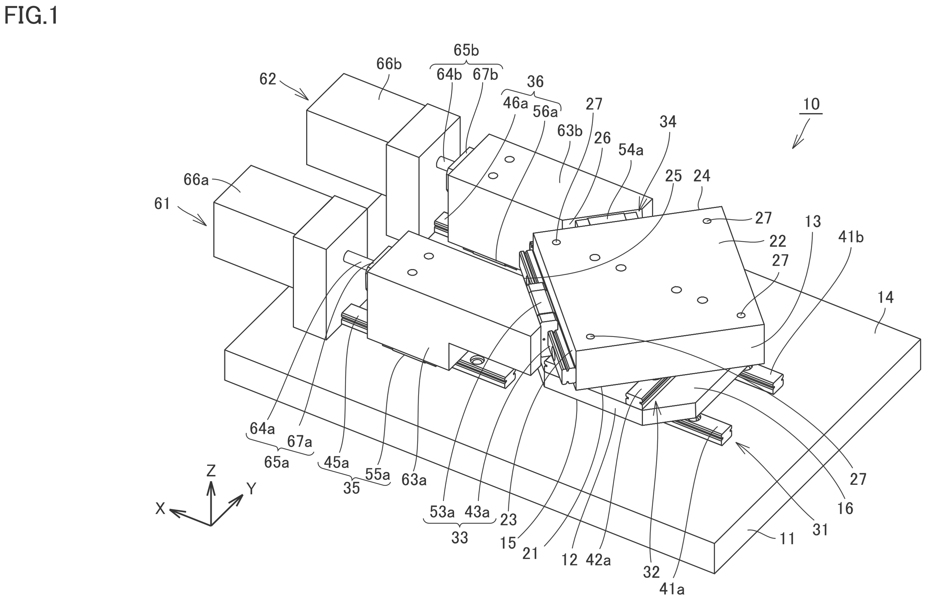

One embodiment of the present disclosure, Embodiment 1, will be described first. FIG. 1 is a schematic perspective view of a table unit of Embodiment 1 of the present disclosure. In FIG. 1, arrow X indicates a direction from a front surface to a rear surface of the table unit, arrow Y indicates a direction from a left side surface to a right side surface of the table unit, and arrow Z indicates a direction from a bottom surface to the top of the table unit. The direction indicated by the arrow Z is a height direction of the table unit. The same applies to the following figures.

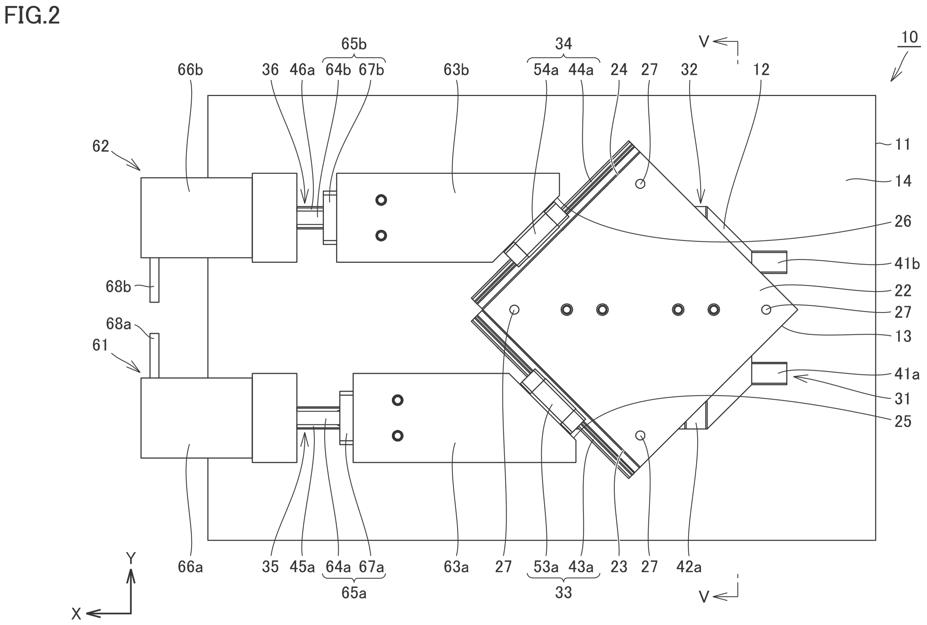

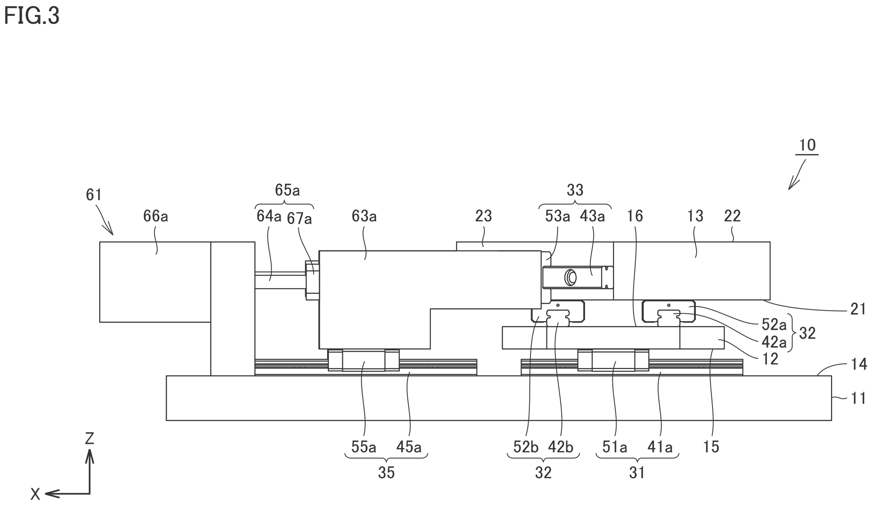

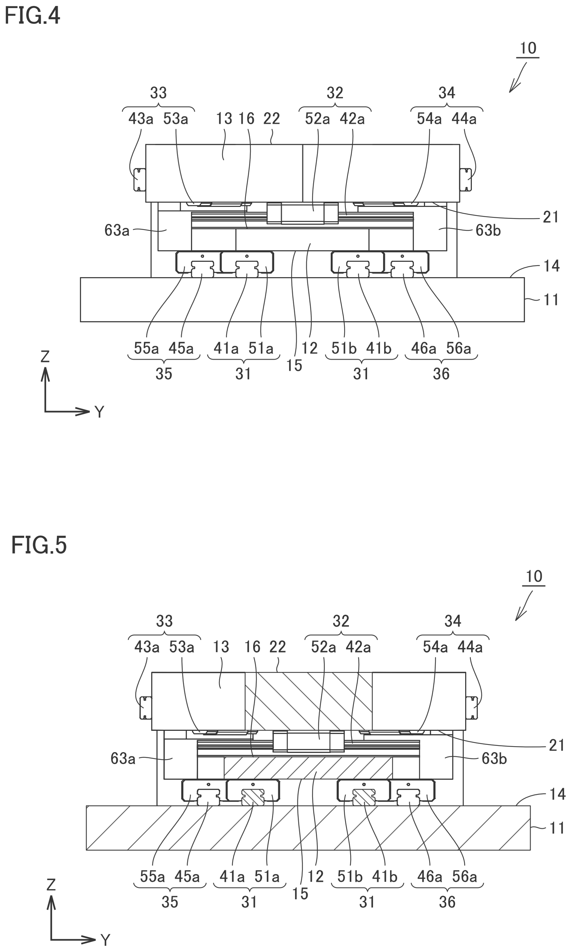

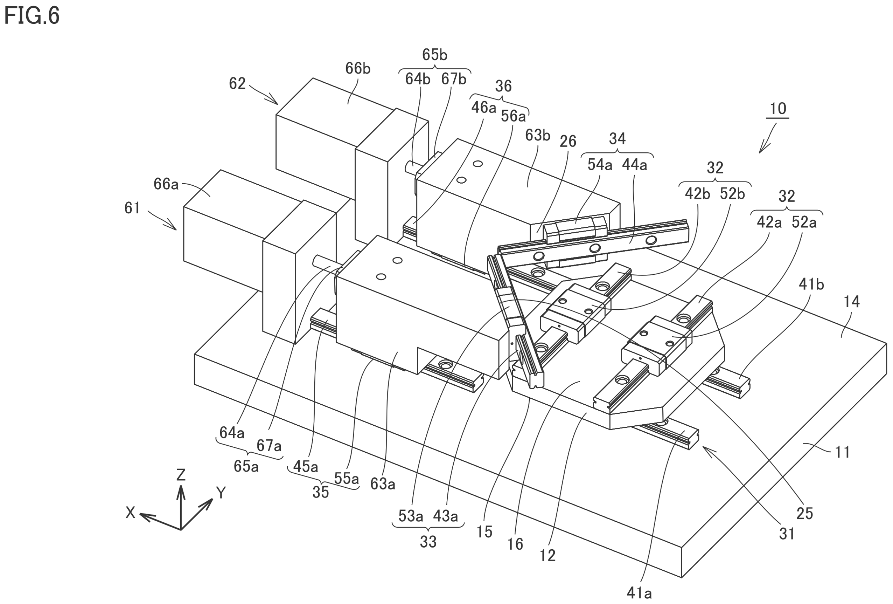

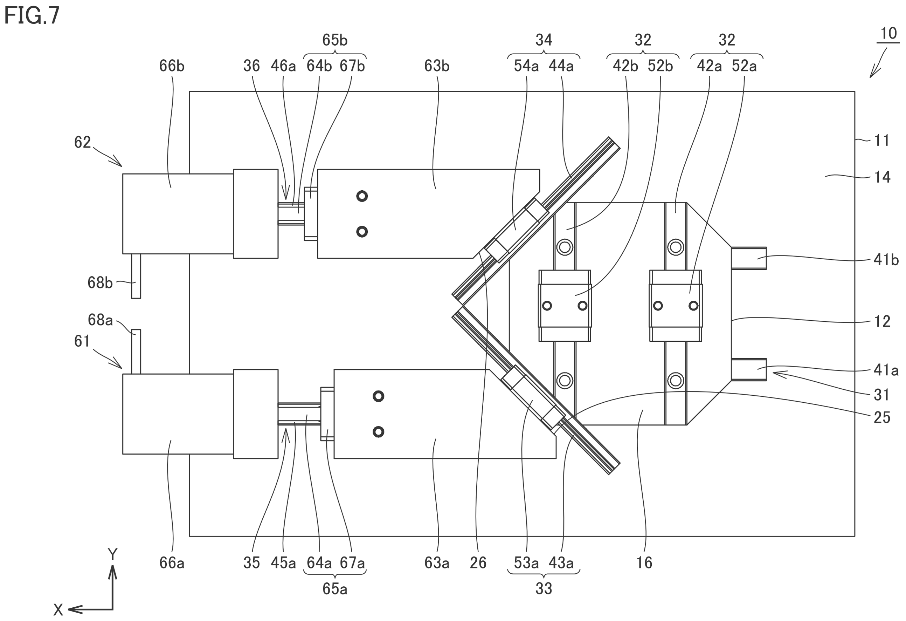

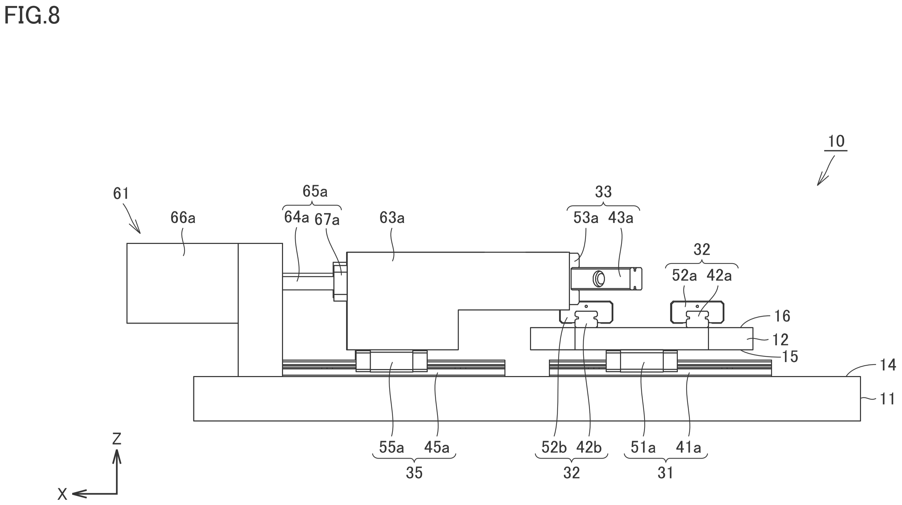

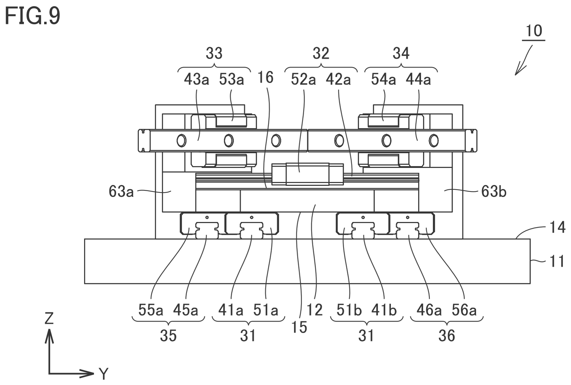

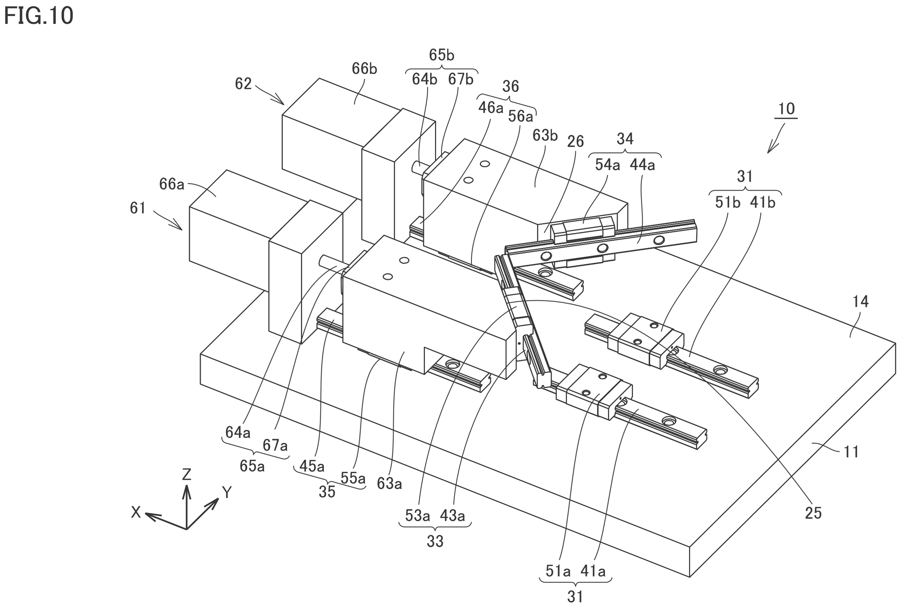

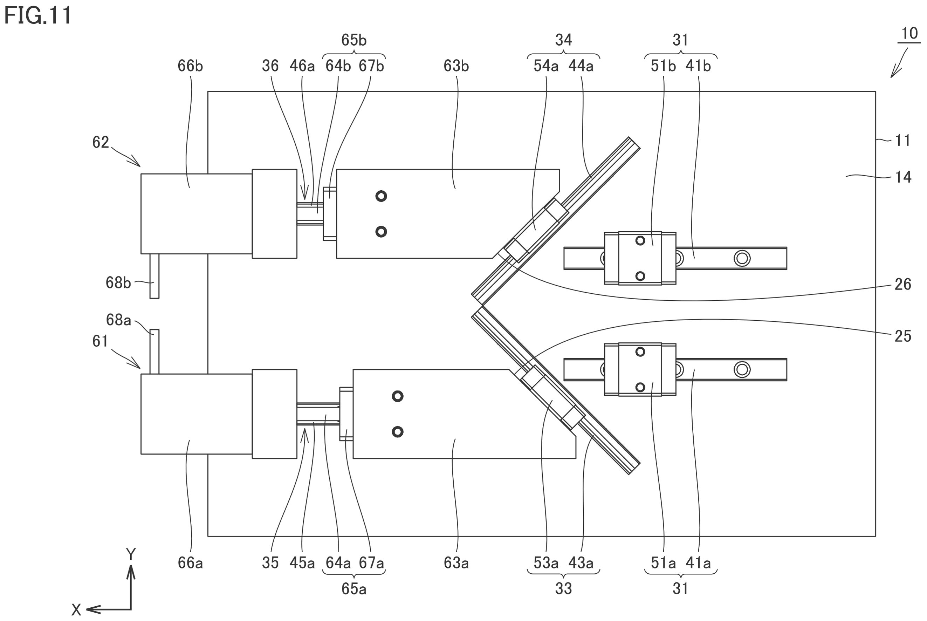

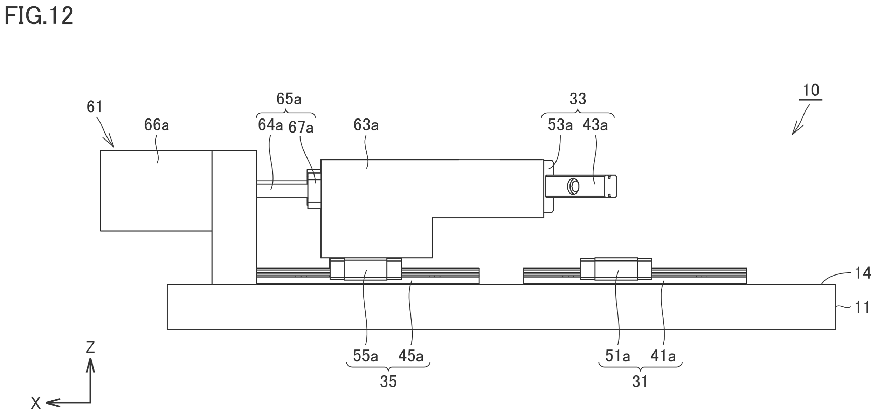

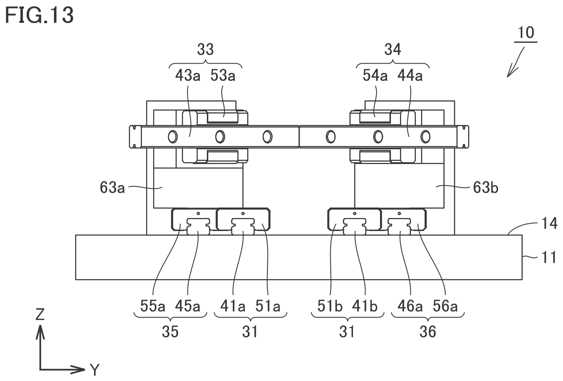

FIG. 2 is a schematic plan view of the table unit shown in FIG. 1. It should be noted that the cables described later are shown only in FIGS. 2, 7, and 11, and are not shown in the other figures. FIG. 3 is a schematic side view of the table unit shown in FIG. 1. FIG. 4 is a schematic front view of the table unit shown in FIG. 1. FIG. 5 is a schematic cross-sectional view when cut in a cross section indicated by arrows V-V in FIG. 2. FIG. 6 is a schematic perspective view of the table unit shown in FIG. 1, with a table portion, described later, removed. FIG. 7 is a schematic plan view of the table unit shown in FIG. 6. FIG. 8 is a schematic side view of the table unit shown in FIG. 6. FIG. 9 is a schematic front view of the table unit shown in FIG. 6. FIG. 10 is a schematic perspective view of the table unit shown in FIG. 6, with a support portion and a second linear motion device, described later, removed. FIG. 11 is a schematic plan view of the table unit shown in FIG. 10. FIG. 12 is a schematic side view of the table unit shown in FIG. 10. FIG. 13 is a schematic front view of the table unit shown in FIG. 10.

Referring to FIGS. 1 to 13, the table unit 10 of Embodiment 1 of the present disclosure performs positioning of a table portion 13, described below, by moving it in a first direction, the X direction, and a second direction, the Y direction.

The table unit 10 includes a base portion 11, a support portion 12, and a table portion 13. The base portion 11 has a plate shape. In the present embodiment, the base portion 11 has a rectangular shape with the length in the X direction being longer than the length in the Y direction as viewed in a thickness direction (Z direction), which is the height direction of the table unit 10. The base portion 11 includes a base surface 14 located on one side in the thickness direction. The base surface 14 is a surface on which a first linear motion mechanism and others, described later, are mounted. The base surface 14 is a flat surface parallel to the X-Y plane.

The support portion 12 includes a first support surface 15 facing the base surface 14, and a second support surface 16 spaced from the first support surface 15 in a direction perpendicular to the base surface 14, the Z direction. The support portion 12 is arranged between the base portion 11 and the table portion 13 in the Z direction, spaced from both portions. In other words, the support portion 12 is disposed between the base portion 11 and the table portion 13 in the Z direction.

The table portion 13 includes a first table surface 21 facing the second support surface 16, a second table surface 22 spaced from the first table surface 21 in the Z direction, a third table surface 23 intersecting each of the first table surface 21 and the second table surface 22, and a fourth table surface 24 intersecting each of the first table surface 21, the second table surface 22, and the third table surface. An object can be placed on the second table surface 22, or can be attached by utilizing four attachment holes 27 provided to be open on the second table surface 22. In other words, the second table surface 22 serves as a table surface on which an object is placed in the table unit 10. The third table surface 23 and the fourth table surface 24 each extend in a direction perpendicular to the base surface 14. The third table surface 23 and the fourth table surface 24 are arranged adjacent to each other. The third table surface 23 and the fourth table surface 24 each constitute a side surface of the table portion 13. The configurations of the support portion 12 and the table portion 13 will be described in detail later.

The table unit 10 includes a first linear motion mechanism 31, a second linear motion mechanism 32, a third linear motion mechanism 33, and a fourth linear motion mechanism 34. The table unit 10 further includes a first drive portion 61 and a second drive portion 62.

The first linear motion mechanism 31 is attached to the base portion 11. The first linear motion mechanism 31 includes first rails 41a and 41b extending in the first direction, the X direction, and first sliders 51a and 51b attached to the first rails 41a and 41b, respectively, and movable along the first direction, the X direction. In other words, the first rails 41a and 41b are each arranged such that its longitudinal direction coincides with the X direction. In the present embodiment, the table unit 10 includes a plurality of first rails 41a, 41b, specifically a pair of (two) first rails 41a and 41b. The first rails 41a and 41b are each attached to the base surface 14. The first rails 41a and 41b are fixed on the base surface 14 with bolts, not shown. The pair of first rails 41a and 41b are arranged in parallel, spaced apart in the Y direction. Each of the first rails 41a and 41b has rail raceway surfaces provided on both side surfaces in the Y direction, on which rolling surfaces of rolling elements, balls in the present embodiment, roll.

The first slider 51a attached to the first rail 41a is movable in the X direction. The first slider 51a is capable of performing a linear reciprocating motion smoothly in the X direction with a plurality of balls disposed between the first slider 51a and the rail raceway surfaces of the first rail 41a. Similar to the first slider 51a, the first slider 51b attached to the first rail 41b is movable in the X direction. The first slider 51b is capable of performing a linear reciprocating motion smoothly in the X direction with a plurality of balls disposed between the first slider 51b and the rail raceway surfaces of the first rail 41b.

The support portion 12 has a flat plate shape. The support portion 12 has a rectangular shape with its four corners removed, as viewed in a direction perpendicular to the base surface 14. The support portion 12 is attached to the first sliders 51a and 51b. Specifically, the support portion 12 is attached such that its first support surface 15 facing the base surface 14 is placed on the first sliders 51a and 51b. The support portion 12 is fixed to the first sliders 51a and 51b with bolts, not shown. Since the support portion 12 is attached to the first sliders 51a and 51b, the support portion 12 is guided by the first linear motion mechanism 31 during its movement in the X direction. In other words, the support portion 12 is capable of moving in the first direction, the X direction, together with the first sliders 51a and 51b.

The second linear motion mechanism 32 is attached to the support portion 12. The second linear motion mechanism 32 includes second rails 42a and 42b extending in the second direction, the Y direction, and second sliders 52a and 52b attached to the second rails 42a and 42b, respectively, and movable along the second direction, the Y direction. In other words, the second rails 42a and 42b are each arranged such that its longitudinal direction coincides with the Y direction. In the present embodiment, the table unit 10 includes a plurality of second rails 42a, 42b, specifically a pair of (two) second rails 42a and 42b. The second rails 42a and 42b are each attached to the second support surface 16. The second rails 42a and 42b are fixed on the second support surface 16 with bolts, not shown. The pair of second rails 42a and 42b are arranged in parallel, spaced apart in the X direction. The second rails 42a and 42b are each orthogonal to the first rails 41a and 41b. Each of the second rails 42a and 42b has rail raceway surfaces provided on both side surfaces in the X direction, on which rolling surfaces of the rolling elements, balls in the present embodiment, roll.

The second slider 52a attached to the second rail 42a is movable in the Y direction. The second slider 52a is capable of performing a linear reciprocating motion smoothly in the Y direction with a plurality of balls disposed between the second slider 52a and the rail raceway surfaces of the second rail 42a. Similar to the second slider 52a, the second slider 52b attached to the second rail 42b is movable in the Y direction. The second slider 52b is capable of performing a linear reciprocating motion smoothly in the Y direction with a plurality of balls disposed between the second slider 52b and the rail raceway surfaces of the second rail 42b.

The table portion 13 has a flat plate shape. The table portion 13 has a rectangular shape as viewed in the direction perpendicular to the base surface 14. The table portion 13 is attached to the second sliders 52a and 52b. Specifically, the table portion 13 is attached such that its first table surface 21 facing the second support surface 16 is placed on the second sliders 52a and 52b. The table portion 13 has the third table surface 23 and the fourth table surface 24 each inclined by 45 degrees with respect to each of the X direction and the Y direction. The table portion 13 is fixed to the second sliders 52a and 52b with bolts, not shown. Since the table portion 13 is attached to the second sliders 52a and 52b, the table portion 13 is guided by the second linear motion mechanism 32 during its movement in the Y direction. In other words, the table portion 13 is capable of moving in the second direction, the Y direction, together with the second sliders 52a and 52b. In addition, since the table portion 13 is attached to the support portion 12 movable in the X direction, the table portion 13 is capable of moving in the X direction together with the support portion 12. In other words, the table portion 13 is capable of moving in the X direction and the Y direction. During the movement in the X direction, the table portion 13 is guided by the first linear motion mechanism 31, and during the movement in the Y direction, the table portion 13 is guided by the second linear motion mechanism 32.

The third linear motion mechanism 33 is attached to the third table surface 23. The third linear motion mechanism 33 includes a third rail 43a extending in a third direction intersecting each of the first direction, the X direction, and the second direction, the Y direction, and a third slider 53a attached to the third rail 43a and movable in the third direction. In the present embodiment, the third direction is the direction that is inclined by 45 degrees with respect to each of the X direction and the Y direction. The third rail 43a is arranged such that its longitudinal direction coincides with the direction inclined by 45 degrees with respect to each of the X direction and the Y direction. In the present embodiment, the third rail 43a is fixed on the third table surface 23 with bolts, not shown. The third rail 43a has rail raceway surfaces provided on both side surfaces, on which rolling surfaces of the rolling elements, balls in the present embodiment, roll.

The fourth linear motion mechanism 34 is attached to the fourth table surface 24. The fourth linear motion mechanism 34 includes a fourth rail 44a extending in a fourth direction intersecting each of the first direction, the X direction, the second direction, the Y direction, and the third direction, and a fourth slider 54a attached to the fourth rail 44a and movable in the fourth direction. In the present embodiment, the fourth direction is the direction that is inclined by 45 degrees with respect to each of the X direction and the Y direction and is orthogonal to the third direction. The fourth rail 44a is arranged such that its longitudinal direction coincides with the direction inclined by 45 degrees with respect to each of the X direction and the Y direction. In the present embodiment, the fourth rail 44a is fixed on the fourth table surface 24 with bolts, not shown. The fourth rail 44a has rail raceway surfaces provided on both side surfaces, on which rolling surfaces of the rolling elements, balls in the present embodiment, roll.

The first drive portion 61 and the second drive portion 62 are each attached to the base portion 11. Specifically, the first drive portion 61 and the second drive portion 62 are disposed apart from each other in the second direction, the Y direction.

The first drive portion 61 includes a first movable portion 63a. The first movable portion 63a has a block shape and includes a first attachment surface 25 facing the third table surface 23. The first attachment surface 25 is a flat surface and is inclined by 45 degrees with respect to each of the X direction and the Y direction. In the present embodiment, the first attachment surface 25 and the third table surface 23 are parallel. The first movable portion 63a is attached to the third slider 53a. In this case as well, bolts, which are not shown, are used.

The first drive portion 61 includes a ball screw 65a having a screw shaft 64a and a nut 67a, and a motor 66a operable to rotate the screw shaft 64a. The nut 67a is attached to the screw shaft 64a. The first movable portion 63a is attached to the nut 67a. The screw shaft 64a can be rotated by supplying electric power to the motor 66a to rotate the rotation shaft of the motor 66a. The motor 66a can also be rotated in the reverse direction. In other words, the motor 66a can rotate the screw shaft 64a in the forward direction or in the reverse direction. A cable 68a, which is connected to the first drive portion 61 and extends from a side surface of the motor 66a on the side facing a motor 66b, extends from the motor 66a in a direction of the arrow Y (see in particular FIGS. 2, 7, and 11).

The first drive portion 61 also includes a fifth linear motion mechanism 35. The fifth linear motion mechanism 35 is attached to the base portion 11. The fifth linear motion mechanism 35 includes a fifth rail 45a extending in the first direction, the X direction, and a fifth slider 55a attached to the fifth rail 45a and movable along the first direction, the X direction. In other words, the fifth rail 45a is arranged such that its longitudinal direction coincides with the X direction. The fifth rail 45a is attached to the base surface 14. The fifth rail 45a is fixed on the base surface 14 with bolts, not shown. The fifth rail 45a has rail raceway surfaces provided on both side surfaces in the Y direction, on which rolling surfaces of the rolling elements, balls in the present embodiment, roll.

The fifth slider 55a attached to the fifth rail 45a is movable in the X direction. The fifth slider 55a is capable of performing a linear reciprocating motion smoothly in the X direction with a plurality of balls disposed between the fifth slider 55a and the rail raceway surfaces of the fifth rail 45a. The first movable portion 63a is attached to the fifth slider 55a. The fifth linear motion mechanism 35 appropriately guides the first movable portion 63a during its linear reciprocating motion in the X direction.

The second drive portion 62 includes a second movable portion 63b. The second movable portion 63b has a block shape and includes a second attachment surface 26 facing the fourth table surface 24. The second attachment surface 26 is a flat surface and is inclined by 45 degrees with respect to each of the X direction and the Y direction. The second attachment surface 26 is orthogonal to the first attachment surface 25. In the present embodiment, the second attachment surface 26 and the fourth table surface 24 are parallel. The second movable portion 63b is attached to the fourth slider 54a. In this case as well, bolts, which are not shown, are used.

The second drive portion 62 includes a ball screw 65b having a screw shaft 64b and a nut 67b, and a motor 66b operable to rotate the screw shaft 64b. The nut 67b is attached to the screw shaft 64b. The second movable portion 63b is attached to the nut 67b. The screw shaft 64b can be rotated by supplying electric power to the motor 66b to rotate the rotation shaft of the motor 66b. The motor 66b can also be rotated in the reverse direction. In other words, the motor 66b can rotate the screw shaft 64b in the forward direction or in the reverse direction. A cable 68b, which is connected to the second drive portion 62 and extends from a side surface of the motor 66b on the side facing the motor 66a, extends from the motor 66b in the direction of the arrow Y (see in particular FIGS. 2, 7, and 11).

The second drive portion 62 also includes a sixth linear motion mechanism 36. The sixth linear motion mechanism 36 is attached to the base portion 11. The sixth linear motion mechanism 36 includes a sixth rail 46a extending in the first direction, the X direction, and a sixth slider 56a attached to the sixth rail 46a and movable along the first direction, the X direction. In other words, the sixth rail 46a is arranged such that its longitudinal direction coincides with the X direction. The sixth rail 46a is attached to the base surface 14. The sixth rail 46a is fixed on the base surface 14 with bolts, not shown. The sixth rail 46a has rail raceway surfaces provided on both side surfaces in the Y direction, on which rolling surfaces of the rolling elements, balls in the present embodiment, roll.

The sixth slider 56a attached to the sixth rail 46a is movable in the X direction. The sixth slider 56a is capable of performing a linear reciprocating motion smoothly in the X direction with a plurality of balls disposed between the sixth slider 56a and the rail raceway surfaces of the sixth rail 46a. The second movable portion 63b is attached to the sixth slider 56a. The sixth linear motion mechanism 36 appropriately guides the second movable portion 63b during its linear reciprocating motion in the X direction.

An operation of the table unit 10 having the above-described configuration will now be described. The table unit 10 performs positioning of the table portion 13 by causing it to move in the first direction, the X direction, and the second direction, the Y direction. As the motor 66a is rotated, the ball screw 65a causes the first movable portion 63a attached to the nut 67a to move in the direction indicated by the arrow X or in the opposite direction. As the motor 66b is rotated, the ball screw 65b causes the second movable portion 63b attached to the nut 67b to move in the direction indicated by the arrow X or in the opposite direction. In conjunction with these movements of the first movable portion 63a and the second movable portion 63b, the third linear motion mechanism 33 and the fourth linear motion mechanism 34 guide the movement of the table portion 13, thereby allowing the table portion 13 to move in the X-Y plane.

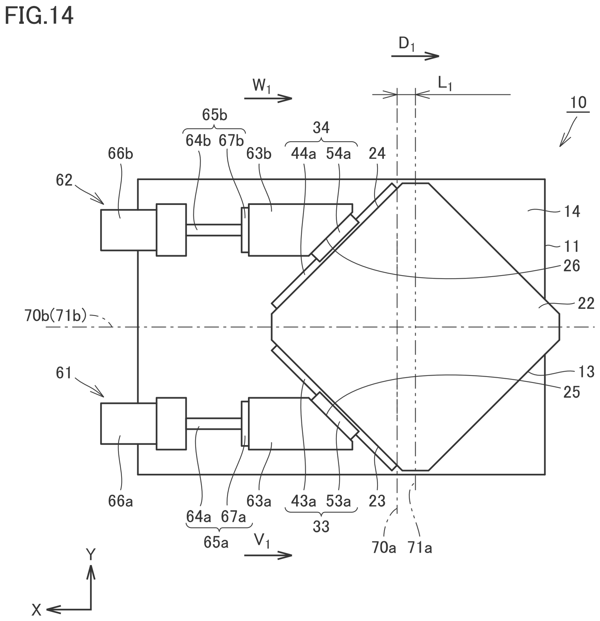

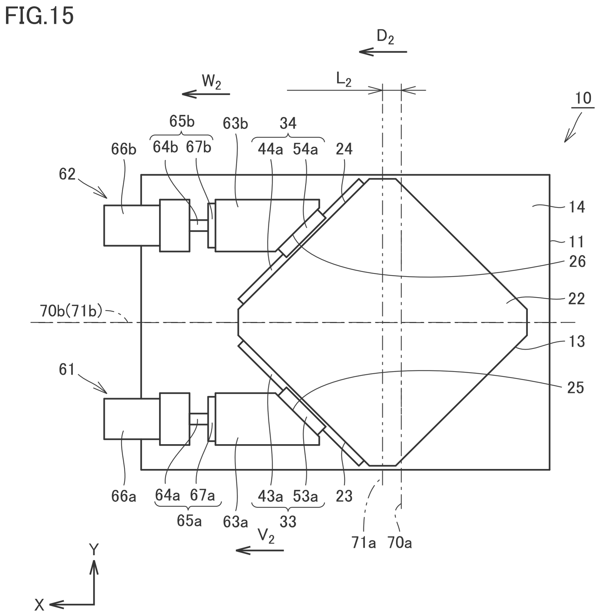

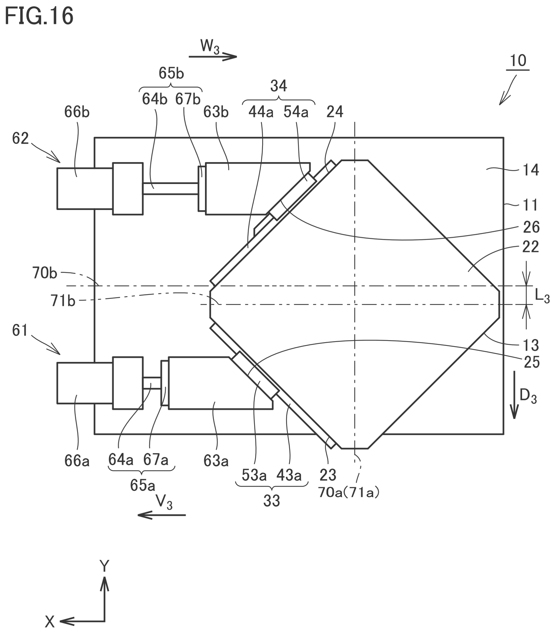

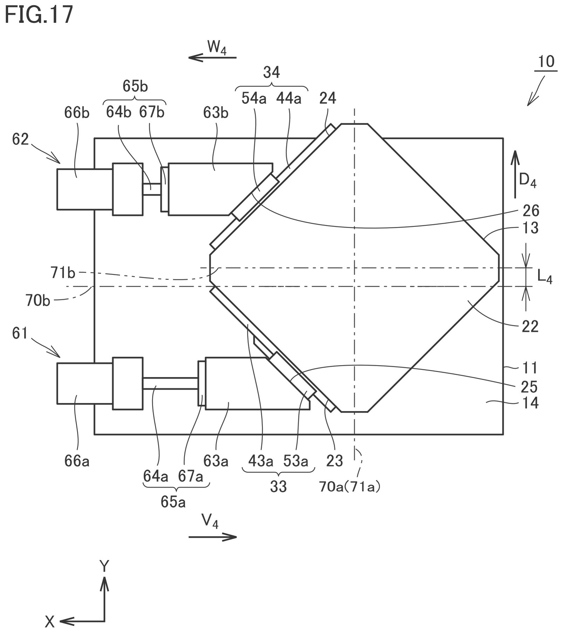

Specific operations during the movement of the table portion 13 will now be described. FIGS. 14 to 17 are schematic plan views of the table unit 10, in which the table unit 10 shown in FIG. 2 is further simplified. FIG. 14 is a schematic plan view of the table unit 10 when the table portion 13 is moved in a direction indicated by arrow D₁ in the first direction. FIG. 15 is a schematic plan view of the table unit 10 when the table portion 13 is moved in a direction indicated by arrow D₂ in the first direction. FIG. 16 is a schematic plan view of the table unit 10 when the table portion 13 is moved in a direction indicated by arrow D₃ in the second direction. FIG. 17 is a schematic plan view of the table unit 10 when the table portion 13 is moved in a direction indicated by arrow D₄ in the second direction. In FIGS. 14 to 17, the reference position of the table portion 13 in the X direction is indicated by a reference line 70a, which is represented by a long-dashed short-dashed line, and the center position of the table portion 13 in the X direction is indicated by a center line 71a, which is represented by a long-dashed double-short-dashed line. Further, the reference position of the table portion 13 in the Y direction is indicated by a reference line 70b, which is represented by a long-dashed short-dashed line, and the center position of the table portion 13 in the Y direction is indicated by a center line 71b, which is represented by a long-dashed double-short-dashed line. The arrows D₁ and D₂ are in opposite directions in the first direction (the X direction). The arrows D₃ and D₄ are in opposite directions in the second direction (the Y direction).

First, referring to FIG. 14, when it is desired to move the table portion 13 in the direction indicated by the arrow D₁ in the first direction, the motor 66a is rotated in a forward direction, for example, to rotate the screw shaft 64a in the forward direction. Then, the first movable portion 63a moves in a direction indicated by arrow V₁. The motor 66b is also rotated in the forward direction, for example, to rotate the screw shaft 64b in the forward direction. Then, the second movable portion 63b moves in a direction indicated by arrow W₁. In this manner, in the first direction (the X direction), movement of the table portion 13 in the direction indicated by the arrow D₁ with a stroke of length L₁ is achieved.

Next, referring to FIG. 15, when it is desired to move the table portion 13 in the direction indicated by the arrow D₂ in the first direction, the motor 66a is rotated in the reverse direction, for example, to rotate the screw shaft 64a in the reverse direction. Then, the first movable portion 63a moves in a direction indicated by arrow V₂. The motor 66b is also rotated in the reverse direction, for example, to rotate the screw shaft 64b in the reverse direction. Then, the second movable portion 63b moves in a direction indicated by arrow W₂. In this manner, in the first direction (the X direction), movement of the table portion 13 in the direction indicated by the arrow D₂ with a stroke of length L₂ is achieved.

Next, referring to FIG. 16, when it is desired to move the table portion 13 in the direction indicated by the arrow D₃ in the second direction, the motor 66a is rotated in the reverse direction, for example, to rotate the screw shaft 64a in the reverse direction. Then, the first movable portion 63a moves in a direction indicated by arrow V₃. The motor 66b is rotated in the forward direction, for example, to rotate the screw shaft 64b in the forward direction. Then, the second movable portion 63b moves in a direction indicated by arrow W₃. In this manner, in the second direction (the Y direction), movement of the table portion 13 in the direction indicated by the arrow D₃ with a stroke of length L₃ is achieved.

Next, referring to FIG. 17, when it is desired to move the table portion 13 in the direction indicated by the arrow D₄ in the second direction, the motor 66a is rotated in the forward direction, for example, to rotate the screw shaft 64a in the forward direction. Then, the first movable portion 63a moves in a direction indicated by arrow V₄. The motor 66b is rotated in the reverse direction, for example, to rotate the screw shaft 64b in the reverse direction. Then, the second movable portion 63b moves in a direction indicated by arrow W₄. In this manner, in the second direction (the Y direction), movement of the table portion 13 in the direction indicated by the arrow D₄ with a stroke of length L₄ is achieved.

According to the table unit 10 described above, the table portion 13 can be moved to any position in the first and second directions in a plane defined by the first and second directions, by utilizing the guide by the third linear motion mechanism 33 and the guide by the fourth linear motion mechanism 34 through the control of the linear reciprocating motion of the first movable portion 63a by the first drive portion 61 and the control of the linear reciprocating motion of the second movable portion 63b by the second drive portion 62. In this case, the movement of the table portion 13 in the first direction is guided by the first linear motion mechanism 31, and the movement of the table portion 13 in the second direction is guided by the second linear motion mechanism 32, thereby enabling smooth movement of the table portion 13. Here, the first sliders 51a and 51b included in the first linear motion mechanism 31 are attached to the first support surface 15 of the support portion 12, and the second rails 42a and 42b included in the second linear motion mechanism 32 are attached to the second support surface 16 of the support portion 12, so the mechanism for moving the table portion 13 in the first direction and the second direction can be reduced in size in the direction perpendicular to the base surface 14. Therefore, according to such a table unit 10, a lower profile is achieved for the unit. In other words, such a table unit 10 can be reduced in length in the Z direction, which is the direction perpendicular to the X-Y plane.

In the present embodiment, the first direction and the second direction are orthogonal to each other. This enables more efficient movement of the table portion 13 in the first direction and the second direction in the above-described plane (the X-Y plane).

In the present embodiment, the third direction and the fourth direction are orthogonal to each other. This enables more efficient movement of the table portion 13 in the first direction and the second direction in the above-described plane (the X-Y plane).

In the present embodiment, the first linear motion mechanism 31 includes a plurality of the first rails 41a and 41b and a plurality of the first sliders 51a and 51b. This enables more stable movement of the table portion 13 in the first direction by utilizing the plurality of first rails 41a and 41b and the plurality of first sliders 51a and 51b.

In the present embodiment, the second linear motion mechanism 32 includes a plurality of the second rails 42a and 42b and a plurality of the second sliders 52a and 52b. This enables more stable movement of the table portion 13 in the second direction by utilizing the plurality of second rails 42a and 42b and the plurality of second sliders 52a and 52b.

In the present embodiment, the first drive portion 61 and the second drive portion 62 each include the ball screw 65a, 65b having the screw shaft 64a, 64b, and the motor 66a, 66b operable to rotate the screw shaft 64a, 64b. This makes it easy to more precisely control the linear reciprocating motion of both the first movable portion 63a and the second movable portion 63b. Therefore, it becomes possible to more easily perform the precise positioning of the table portion 13.

In the present embodiment, the third table surface 23 and the fourth table surface 24 are orthogonal to each other. This enables more efficient movement of the table portion 13 in the first direction and the second direction in the above-described plane (the X-Y plane).

In the present embodiment, the first drive portion 61 and the second drive portion 62 are arranged apart from each other in the second direction. This makes it possible to align the direction (X direction) in which the cable 68a connected to the first drive portion 61 extends and the direction (X direction) in which the cable 68b connected to the second drive portion 62 extends, thereby facilitating the handling of the cables 68a and 68b during installation. Therefore, it becomes easier to achieve a lower profile for the unit.

In the present embodiment, the first linear motion mechanism may include a pair of the first rails and a pair of the first sliders. The second linear motion mechanism may include a pair of the second rails and a pair of the second sliders. The pair of first rails may be arranged in parallel. The pair of second rails may be arranged in parallel. The second rails may be orthogonal to the first rails. With this configuration, the loads applied to the first and second linear motion mechanisms in the direction orthogonal to the base surface can be appropriately distributed. Therefore, the movement of the table portion in the first direction and the second direction can be controlled more stably.

In the present embodiment, the third table surface 23 and the fourth table surface 24 each extend along the direction perpendicular to the base surface 14 and constitute a side surface of the table portion 13. This can simplify the configuration of the table portion 13. Therefore, the configuration of the table unit 10 can be further simplified.

### (Embodiment 2)

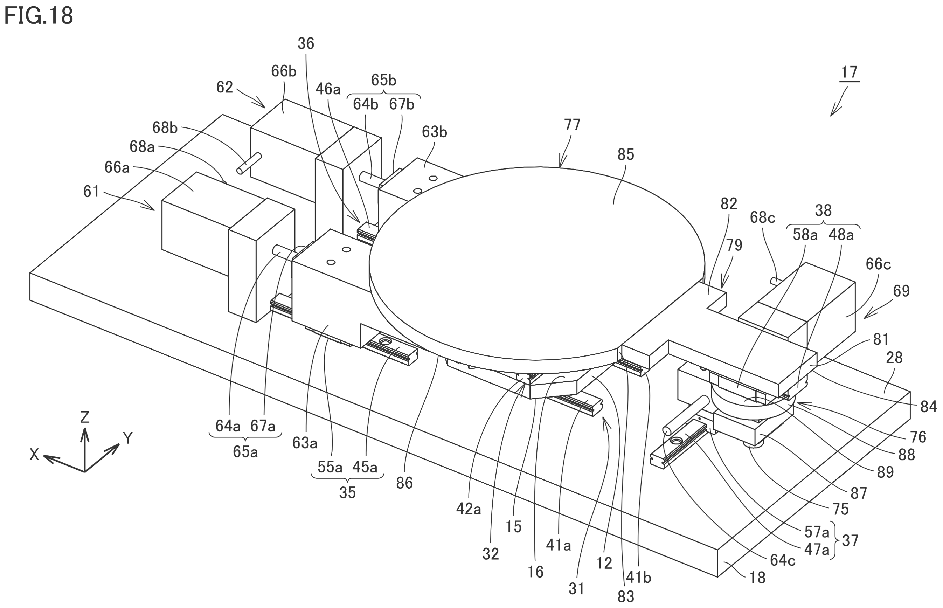

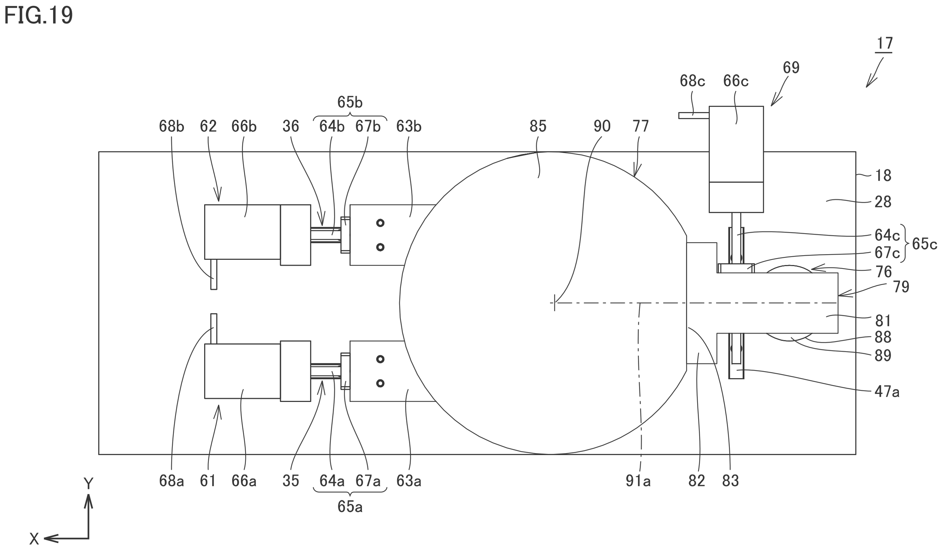

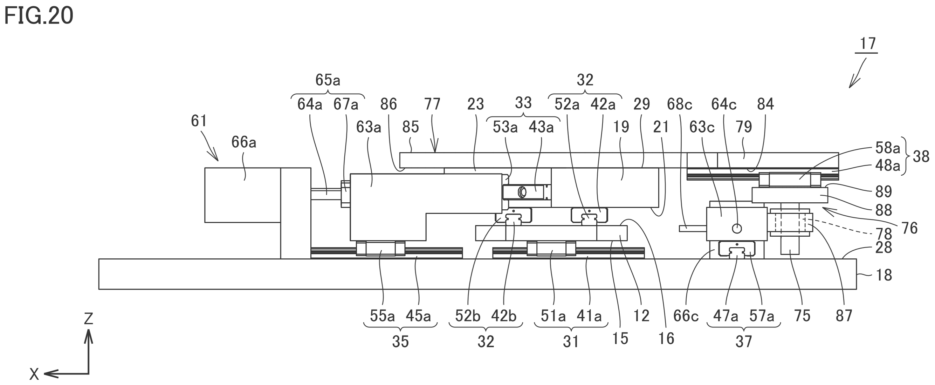

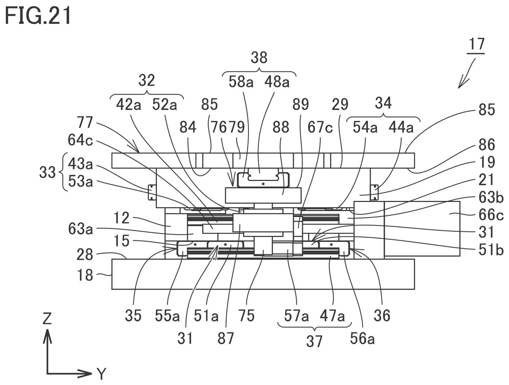

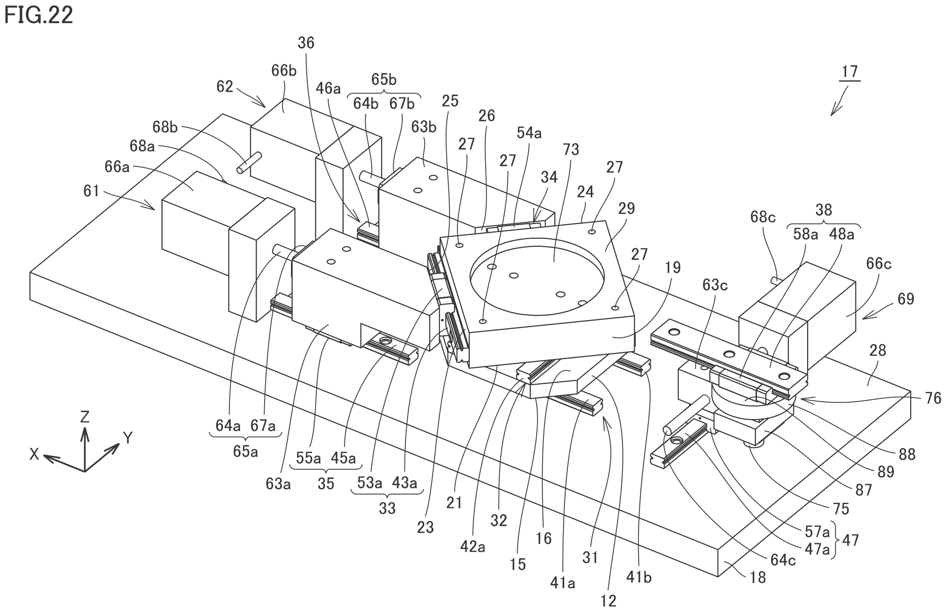

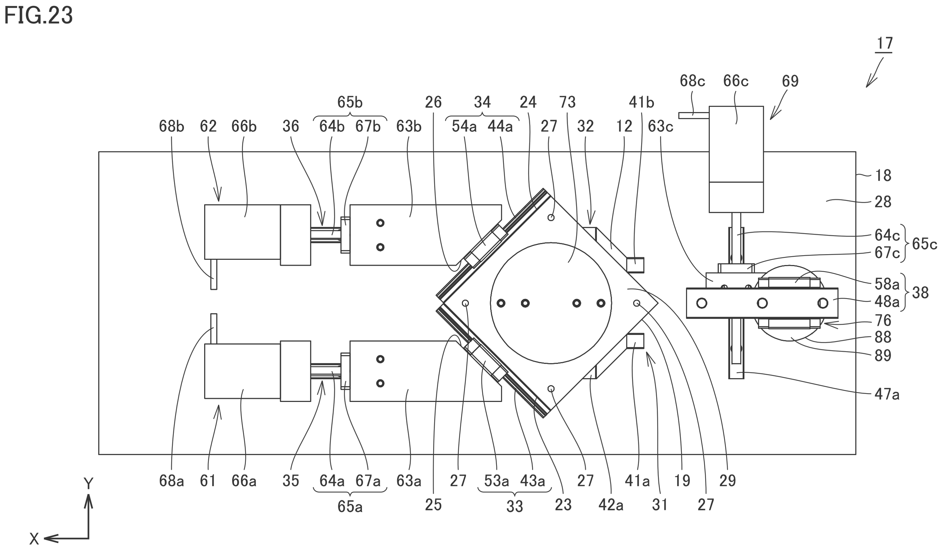

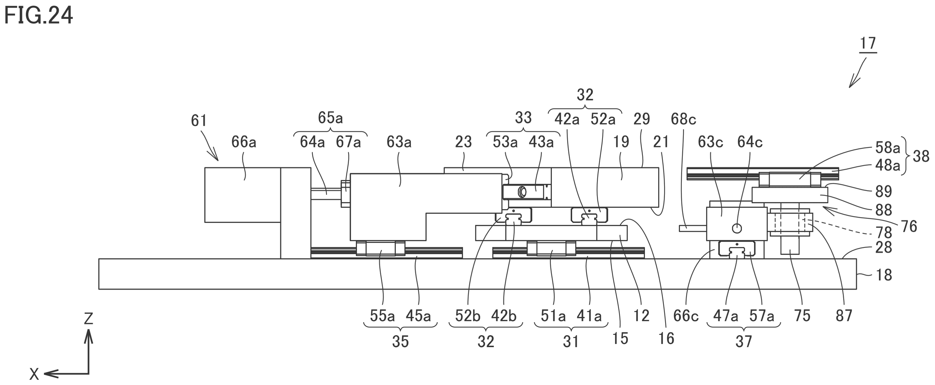

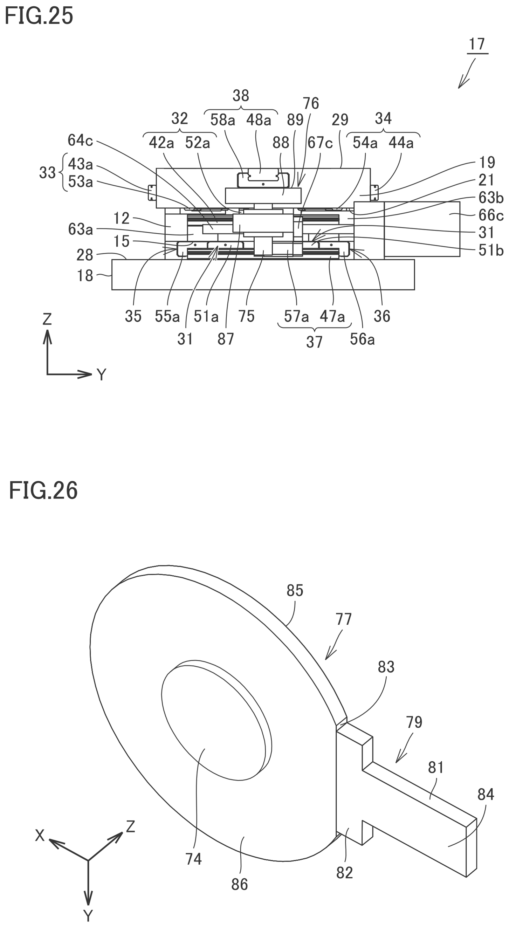

Another embodiment, Embodiment 2, will now be described. FIG. 18 is a schematic perspective view of a table unit of Embodiment 2 of the present disclosure. FIG. 19 is a schematic plan view of the table unit shown in FIG. 18. FIG. 20 is a schematic side view of the table unit shown in FIG. 18. FIG. 21 is a schematic front view of the table unit shown in FIG. 18. FIG. 22 is a schematic perspective view of the table unit shown in FIG. 18, with a rotary stage, described later, removed. FIG. 23 is a schematic plan view of the table unit shown in FIG. 22. FIG. 24 is a schematic side view of the table unit shown in FIG. 22. FIG. 25 is a schematic front view of the table unit shown in FIG. 22. FIG. 26 is a schematic perspective view of the rotary stage, described later, included in the table unit. In FIG. 19, a reference line 91a prior to the rotation of the rotary stage 77 and an attachment portion 79, which are described later, is represented by a long-dashed short-dashed line.

The table unit 17 of Embodiment 2 basically has a similar configuration and provides similar effects as in the case of Embodiment 1. However, the table unit 17 of Embodiment 2 differs from that of Embodiment 1 in the structure of the table portion and in that it has a configuration in which a rotary stage attached onto the table portion can rotate in the XY plane.

Referring to FIGS. 18 to 26, the table unit 17 of Embodiment 2, as in the case of Embodiment 1, includes a base portion 18, a support portion 12, a first linear motion mechanism 31, a second linear motion mechanism 32, a third linear motion mechanism 33, a fourth linear motion mechanism 34, a first drive portion 61, and a second drive portion 62. The configurations of the support portion 12, the first linear motion mechanism 31, the second linear motion mechanism 32, the third linear motion mechanism 33, the fourth linear motion mechanism 34, the fifth linear motion mechanism 35, the sixth linear motion mechanism 36, the first drive portion 61, and the second drive portion 62 included in the table unit 17 are identical to those in the case of Embodiment 1. Further, the configuration of the base portion 18 included in the table unit 17 is similar to that in Embodiment 1, except that its length in the longitudinal direction, i.e., the X direction, is longer than that of the base portion 11 included in the table unit 10 of Embodiment 1.

The table unit 17 includes a table portion 19. While the table portion 19 has a configuration basically similar to that of the table portion 13 included in the table unit 10 of Embodiment 1, the configuration of the second table surface differs from that of the table portion 13 included in Embodiment 1. The second table surface 29 included in the table portion 19 of the table unit 17 is not a completely flat surface and is provided with a cylindrical recess 73. The recess 73 is provided in the center of the second table surface 29. The recess 73 is sized to allow a cylindrical protrusion 74, provided on a back surface 86 of a rotary stage 77, described later, to be fitted therein. Specifically, the recess 73 is configured such that its diameter is slightly larger than the diameter of the protrusion 74.

The table unit 17 includes a third drive portion 69, a shaft portion 75, a rotary portion 76, and a rotary stage 77. The third drive portion 69 includes a third movable portion 63c movable in a third direction intersecting the first direction. The third direction is a direction orthogonal to the first direction (the X direction) and identical to the second direction (the Y direction). The third drive portion 69 causes the third movable portion 63c to perform a linear reciprocating motion in the third direction (the Y direction). Similar to the first drive portion 61 and the second drive portion 62, the third drive portion 69 is attached to the base portion 18. Specifically, the third drive portion 69 is disposed apart from the first drive portion 61 and the second drive portion 62 in the X direction.

The third drive portion 69 includes a ball screw 65c having a screw shaft 64c and a nut 67c, and a motor 66c operable to rotate the screw shaft 64c. As for the motor 66c, the portion that substantially rotates is located inside, and the housing portion is designated as 66c. The same applies to the motors 66a and 66b described above. The nut 67c is attached to the screw shaft 64c. The third movable portion 63c is attached to the nut 67c. The screw shaft 64c can be rotated by supplying electric power to the motor 66c to rotate the rotation shaft of the motor 66c. The motor 66c can also be rotated in the reverse direction. In other words, the motor 66c can rotate the screw shaft 64c in the forward direction or in the reverse direction. A cable 68c, which is connected to the third drive portion 69 and extends from a side surface of the motor 66c, extends from the motor 66c in the direction of the arrow X.

The third movable portion 63c has a block shape. The third movable portion 63c has the rotary portion 76 attached thereto. The third movable portion 63c includes a seventh linear motion mechanism 37. The seventh linear motion mechanism 37, similar to the first linear motion mechanism 31, is attached to the base portion 18. The seventh linear motion mechanism 37 includes a seventh rail 47a extending in the second direction, the Y direction, and a seventh slider 57a attached to the seventh rail 47a and movable along the second direction, the Y direction. In other words, the seventh rail 47a is arranged such that its longitudinal direction coincides with the Y direction. In the present embodiment, only one seventh rail 47a is provided and fixed on the base surface 28. The seventh rail 47a is provided, spaced apart from the pair of first rails 41a and 41b in the X direction, on extensions in the longitudinal direction of the first rails 41a and 41b. The seventh rail 47a extends in a direction orthogonal to each of the first rails 41a and 41b. The seventh rail 47a has rail raceway surfaces provided on both side surfaces in the X direction, on which rolling surfaces of the rolling elements, balls in the present embodiment, roll.

The seventh slider 57a attached to the seventh rail 47a is movable in the Y direction. The seventh slider 57a is capable of performing a linear reciprocating motion smoothly in the Y direction with a plurality of balls disposed between the seventh slider 57a and the rail raceway surfaces of the seventh rail 47a. The third movable portion 63c is attached to the seventh slider 57a. The seventh linear motion mechanism 37 appropriately guides the third movable portion 63c during its linear reciprocating motion in the Y direction.

The shaft portion 75 extends in a direction perpendicular to a plane defined by the first direction and the third direction. In the present embodiment, the shaft portion is provided to extend in the direction perpendicular to the X-Y plane. The shaft portion 75 has a solid cylindrical rod shape.

The rotary portion 76 is attached to the third movable portion 63c. The rotary portion 76 rotates around a center 90 of the rotary stage 77 in the X-Y plane. Specifically, the rotary portion 76 performs a swinging motion around the center 90 in conjunction with the movement of the third movable portion 63c. This will be described later. The rotary portion 76 includes a circular plate portion 88, and a bearing 78 supporting the shaft portion 75 (see in particular FIG. 20). The circular plate portion 88 is connected to, and integral with, one end, specifically an upper end in the Z direction, of the shaft portion 75. The bearing 78 is a rolling bearing, for example, and specifically a crossed roller bearing is adopted. The rotary portion 76 includes a shaft holding portion 87. The bearing 78 is arranged at the shaft holding portion 87, specifically on an inner side of the shaft holding portion 87. The shaft holding portion 87 has a block shape and is attached and fixed to a side surface of the third movable portion 63c. The shaft holding portion 87 is provided with a through hole penetrating in the Z direction, and the shaft portion 75 and the bearing 78 are disposed in this through hole. Although the shaft holding portion 87 is included in the rotary portion 76, the shaft holding portion 87 itself does not rotate and performs a linear reciprocating motion in the third direction, i.e., the Y direction, together with the third movable portion 63c.

The rotary portion 76 includes an attachment portion 79. The attachment portion 79 has a plate shape with its thickness direction in the Z direction, and includes a long first strip-shaped portion 81 and a second strip-shaped portion 82 extending in a direction orthogonal to the first strip-shaped portion 81. The attachment portion 79 has an approximately T shape as viewed in the thickness direction. The attachment portion 79 is attached to a side surface 83 of the rotary stage 77.

The rotary portion 76 includes an eighth linear motion mechanism 38. The eighth linear motion mechanism 38 is attached to the attachment portion 79. The eighth linear motion mechanism 38 includes an eighth rail 48a, and an eighth slider 58a attached to the eighth rail 48a and movable along the eighth rail 48a. In the present embodiment, only one eighth rail 48a is provided, which is fixed to a lower surface 84 of the attachment portion 79. The eighth rail 48a has rail raceway surfaces provided on both side surfaces, on which rolling surfaces of the rolling elements, balls in the present embodiment, roll. The eighth slider 58a is attached and fixed to an upper surface 89 of the circular plate portion 88.

The eighth rail 48a is provided to extend along a radial direction of the shaft portion 75. The eighth slider 58a attached to the eighth rail 48a is movable along the radial direction of the shaft portion 75. The eighth slider 58a is capable of performing a linear reciprocating motion smoothly along the radial direction of the shaft portion 75 with a plurality of balls disposed between the eighth slider 58a and the rail raceway surfaces of the eighth rail 48a.

The rotary stage 77 has a circular plate shape and has a side surface of a circular arc shape except for the side surface 83 to which the attachment portion 79 is attached. The rotary stage 77 has a flat front surface 85. On a back surface 86 of the rotary stage 77, the protrusion 74 is provided as described above (see in particular FIG. 26). The rotary stage 77 is attached by fitting the protrusion 74 on the back surface 86 into the recess 73 provided on the second table surface 29 of the table portion 19. The protrusion 74 is fitted into the recess 73 with the interposition of a rolling bearing, not shown. For the rolling bearing, a crossed roller bearing, for example, is applied. With such a configuration, the rotary stage 77 is rotatably supported by the table portion 19.

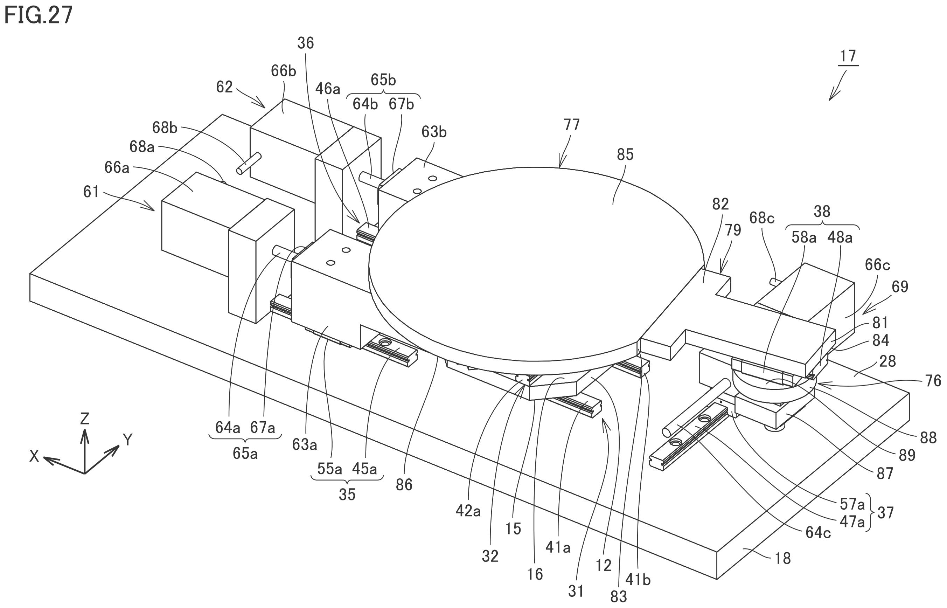

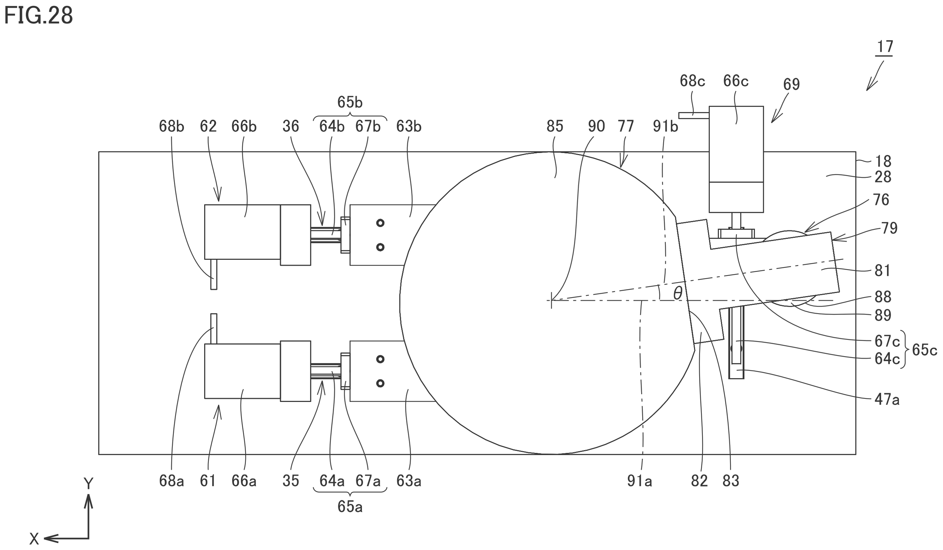

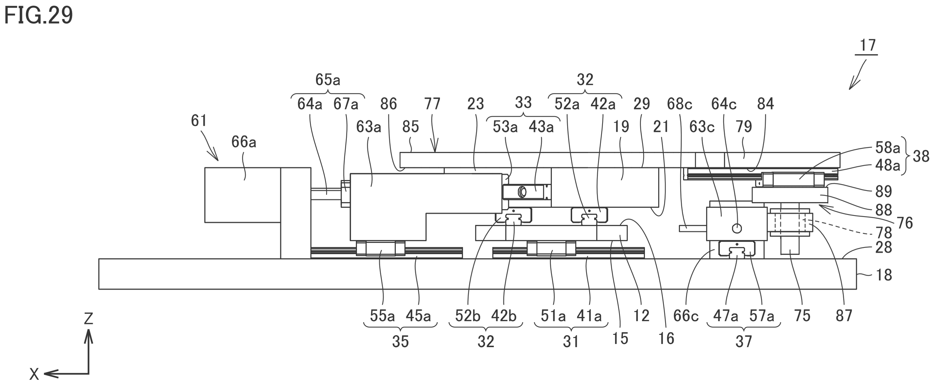

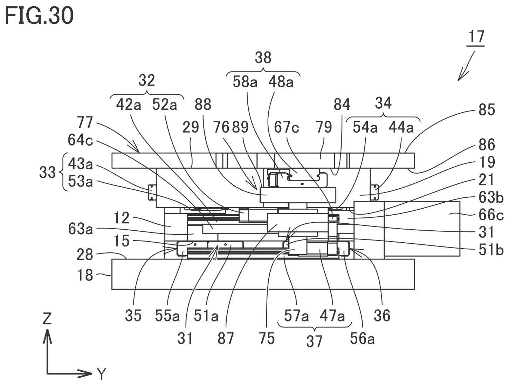

An operation of rotating the rotary stage 77 will now be described. FIG. 27 is a schematic perspective view of the table unit 17, showing the state in which the rotary stage 77 is rotated. FIG. 28 is a schematic plan view of the table unit 17 shown in FIG. 27. FIG. 29 is a schematic side view of the table unit 17 shown in FIG. 27. FIG. 30 is a schematic front view of the table unit 17 shown in FIG. 27. In FIG. 28, a reference line 91b after rotation of the rotary stage 77 and the attachment portion 79 is represented by a long-dashed short-dashed line. FIGS. 27 to 30 show the state in which the rotary stage 77 is rotated by an angle θ with respect to the reference line 91a.

Referring to FIGS. 27 to 30 together, in the table unit 17, the third drive portion 69 is driven to move the third movable portion 63c in the Y direction, specifically in the direction indicated by the arrow Y. Then, along with the direction indicated by the arrow Y of the third movable portion 63c, the shaft holding portion 87 also moves in the direction indicated by the arrow Y. Then, the shaft portion 75 also moves in the direction indicated by the arrow Y. Here, the circular plate portion 88, the eighth linear motion mechanism 38, and the attachment portion 79 configured integrally with the shaft portion 75 are also subjected to a force that attempts to move them in the direction of the arrow Y. However, the attachment portion 79 is attached to the rotary stage 77. In addition, the shaft portion 75 is supported by the bearing 78 included in the rotary portion 76, and the eighth linear motion mechanism 38 allows movement in the radial direction of the rotary stage 77. Therefore, the attachment portion 79 and the eighth linear motion mechanism 38 do not move in the direction of the arrow Y and move in such a manner as to rotate the rotary stage 77 by an angle θ with the center 90 of the rotary stage 77 as the rotation center. In this manner, the rotary stage 77 is rotated by the angle θ.

According to such a table unit 17, the rotary stage 77 can be rotated in the plane defined by the first direction and the third direction, the X-Y plane. Then, the rotary stage 77 can be rotated by moving the table portion 19 in the first direction and the second direction. This can further improve the convenience.

In the present embodiment, the third direction is the direction orthogonal to the first direction and identical to the second direction. Therefore, the rotary stage 77 can be efficiently rotated while reducing the risk of interference between the third drive portion 69 and the rotary stage 77.

In the present embodiment, the third drive portion 69 includes the seventh linear motion mechanism 37. The seventh linear motion mechanism 37 includes the seventh rail 47a attached to the base surface 28 and extending in the third direction, and the seventh slider 57a attached to the seventh rail 47a and movable along the third direction. The third movable portion 63c is attached to the seventh slider 57a. Thus, in the third drive portion 69, the seventh linear motion mechanism 37 can smoothly move the third movable portion 63c in the third direction. Therefore, the rotary stage 77 can be rotated more smoothly.

In the present embodiment, the rotary portion 76 includes the bearing 78 which supports the shaft portion 75. This ensures a smoother rotation of the rotary portion 76. Therefore, the rotary stage 77 can be rotated more smoothly.

In the present embodiment, the rotary portion 76 includes the attachment portion 79 attached to the side surface 83 of the rotary stage 77, and the eighth linear motion mechanism 38. The eighth linear motion mechanism 38 includes the eighth rail 48a attached to the attachment portion 79 and extending in the radial direction of the shaft portion 75, and the eighth slider 58a attached to the eighth rail 48a and movable along the radial direction of the rotary stage 77. The third movable portion 63c is attached to the eighth slider 58a. This ensures a smoother movement of the attachment portion 79. Therefore, the rotary stage 77 can be rotated more smoothly.

### (Other Embodiments)

In the above embodiments, the first direction and the second direction need not be orthogonal to each other. That is, the second direction may form an acute or obtuse angle with the first direction. The third direction and the fourth direction need not be orthogonal to each other. That is, the fourth direction may form an acute or obtuse angle with the third direction.

Furthermore, in the above embodiments, the pair of first rails and the pair of second rails may each be disposed apart from each other as viewed in the direction perpendicular to the base surface. With such a configuration as well, the loads applied to the first and second linear motion mechanisms in the direction orthogonal to the base surface can be appropriately distributed. Therefore, the movement of the table portion in the first direction and the second direction can be controlled more stably.

It should be noted that in the above embodiments, at least one of the first drive portion and the second drive portion may include a ball screw having a screw shaft, and a motor operable to rotate the screw shaft. This facilitates more precise control of the linear reciprocating motion of at least one of the first movable portion and the second movable portion. Therefore, it becomes possible to more easily perform the precise positioning of the table portion.

It should be understood that the embodiments disclosed herein are illustrative and nonrestrictive in every respect. The scope of the present invention is defined by the terms of the claims, and is intended to include any modifications within the scope and meaning equivalent to the terms of the claims.

### Reference Signs List

10, 17: table unit; 11, 18: base portion; 12: support portion; 13, 19: table portion; 14, 28: base surface; 15: first support surface; 16: second support surface; 21: first table surface; 22, 29: second table surface; 23: third table surface; 24: fourth table surface; 25: first attachment surface; 26: second attachment surface; 27: attachment hole; 31: first linear motion mechanism; 32: second linear motion mechanism; 33: third linear motion mechanism; 34: fourth linear motion mechanism; 35: fifth linear motion mechanism; 36: sixth linear motion mechanism; 37: seventh linear motion mechanism; 38: eighth linear motion mechanism; 41a, 41b: first rail; 42a, 42b: second rail; 43a: third rail; 44a: fourth rail; 45a: fifth rail; 46a: sixth rail; 47a: seventh rail; 48a: eighth rail; 51a, 51b: first slider; 52a, 52b: second slider; 53a: third slider; 54a: fourth slider; 55a: fifth slider; 56a: sixth slider; 57a: seventh slider; 58a: eighth slider; 61: first drive portion; 62: second drive portion; 63a: first movable portion; 63b: second movable portion; 63c: third movable portion; 64a, 64b, 64c: screw shaft; 65a, 65b, 65c: ball screw; 66a, 66b, 66c: motor; 67a, 67b, 67c: nut; 68a, 68b, 68c: cable; 69: third drive portion; 70a, 70b, 91a, 91b: reference line; 71a, 71b: center line; 73: recess; 74: protrusion; 75: shaft portion; 76: rotary portion; 77: rotary stage; 78: bearing; 79: attachment portion; 81: first strip-shaped portion; 82: second strip-shaped portion; 83: side surface; 84: lower surface; 85: front surface; 86: back surface; 87: shaft holding portion; 88: circular plate portion; 89: upper surface; and 90: center.

## Claims

1. A table unit comprising:
a base portion having a base surface;
a first linear motion mechanism including a first rail attached to the base surface and extending in a first direction, and a first slider attached to the first rail and movable in the first direction;
a support portion movable in the first direction together with the first slider, the support portion including a first support surface facing the base surface and attached to the first slider, and a second support surface spaced apart from the first support surface in a direction perpendicular to the base surface;
a second linear motion mechanism including a second rail attached to the second support surface and extending in a second direction intersecting the first direction, and a second slider attached to the second rail and movable in the second direction;
a table portion movable in the second direction together with the second slider, the table portion including a first table surface facing the second support surface and attached to the second slider, a second table surface spaced apart from the first table surface in the direction perpendicular to the base surface, a third table surface intersecting each of the first table surface and the second table surface, and a fourth table surface intersecting each of the first table surface, the second table surface, and the third table surface;
a third linear motion mechanism including a third rail attached to the third table surface and extending in a third direction intersecting each of the first direction and the second direction, and a third slider attached to the third rail and movable in the third direction;
a fourth linear motion mechanism including a fourth rail attached to the fourth table surface and extending in a fourth direction intersecting each of the first direction, the second direction, and the third direction, and a fourth slider attached to the fourth rail and movable in the fourth direction;
a first drive portion including a first movable portion attached to the third slider, and causing the first movable portion to perform a linear reciprocating motion in the first direction; and
a second drive portion including a second movable portion attached to the fourth slider, and causing the second movable portion to perform a linear reciprocating motion in the first direction.

2. The table unit according to claim 1, wherein the first direction and the second direction are orthogonal to each other.

3. The table unit according to claim 1 or 2, wherein the third direction and the fourth direction are orthogonal to each other.

4. The table unit according to claim 1 or 2, wherein the first linear motion mechanism includes a plurality of the first rails and a plurality of the first sliders.

5. The table unit according to claim 1 or 2, wherein the second linear motion mechanism includes a plurality of the second rails and a plurality of the second sliders.

6. The table unit according to claim 1 or 2, wherein at least one of the first drive portion and the second drive portion includes
a ball screw having a screw shaft and a nut, and
a motor operable to rotate the screw shaft.

7. The table unit according to claim 1 or 2, wherein the third table surface and the fourth table surface are orthogonal to each other.

8. The table unit according to claim 1 or 2, wherein the first drive portion and the second drive portion are disposed apart from each other in the second direction.

9. The table unit according to claim 1 or 2, wherein
the first linear motion mechanism includes a pair of the first rails and a pair of the first sliders,
the second linear motion mechanism includes a pair of the second rails and a pair of the second sliders,
the pair of first rails are arranged in parallel,
the pair of second rails are arranged in parallel, and
the second rails are orthogonal to the first rails.

10. The table unit according to claim 1 or 2, wherein the third table surface and the fourth table surface each extend along a direction perpendicular to the base surface and constitute a side surface of the table portion.

11. The table unit according to claim 1 or 2, wherein
the first drive portion includes a fifth linear motion mechanism,
the second drive portion includes a sixth linear motion mechanism,
the fifth linear motion mechanism includes
a fifth rail attached to the base surface and extending in the first direction, and
a fifth slider attached to the fifth rail and movable along the first direction, the first movable portion is attached to the fifth slider,
the sixth linear motion mechanism includes
a sixth rail attached to the base surface and extending in the first direction, and
a sixth slider attached to the sixth rail and movable along the first direction, and
the second movable portion is attached to the sixth slider.

12. The table unit according to claim 1 or 2, further comprising:
a third drive portion including a third movable portion movable in a third direction intersecting the first direction, and causing the third movable portion to perform a linear reciprocating motion in the third direction;
a shaft portion extending in a direction perpendicular to a plane defined by the first direction and the third direction;
a rotary portion attached to the third movable portion and rotating around the shaft portion along with movement of the third movable portion; and
a rotary stage provided on the second table surface and attached to the rotary portion so as to be rotatable along with the movement of the third movable portion.

13. The table unit according to claim 12, wherein the third direction is a direction orthogonal to the first direction and identical to the second direction.

14. The table unit according to claim 12, wherein
the third drive portion includes a seventh linear motion mechanism,
the seventh linear motion mechanism includes
a seventh rail attached to the base surface and extending in the third direction, and
a seventh slider attached to the seventh rail and movable along the third direction, and
the third movable portion is attached to the seventh slider.

15. The table unit according to claim 12, wherein the rotary portion includes a bearing that supports the shaft portion.

16. The table unit according to claim 12, wherein
the rotary portion includes
an attachment portion attached to a side surface of the rotary stage, and
an eighth linear motion mechanism,
the eighth linear motion mechanism includes
an eighth rail attached to the attachment portion and extending in a radial direction of the rotary stage, and
an eighth slider attached to the eighth rail and movable along the radial direction of the rotary stage, and
the third movable portion is attached to the eighth slider.
